# EUROPÄISCHE PATENTANMELDUNG

(11) **EP 1 800 733 A1**
(43) Veröffentlichungstag der Anmeldung: **27.06.2007**
(21) Anmeldenummer: 06000004.9
(22) Anmeldetag: 02.01.2006
(51) Int. Cl.: B01D 53/62, B01D 53/94

(54) **Verfahren zur Entfernung von Kohlenstoffoxiden aus Abgasströmen**

(30) Priorität: 20.12.2005 DE 102005060824; 20.12.2005 DE 102005060888
(71) Anmelder: Kirchhoff, Reinhold, 45529 Hattingen (DE)
(72) Erfinder: Kirchhoff, Reinhold, 45529 Hattingen (DE)
(74) Vertreter: Gesthuysen, von Rohr & Eggert

(57) **Zusammenfassung**

Es ist bekannt, dass in Abgasströmen Kohlendioxid CO₂ enthalten ist. Dieses entsteht beispielsweise während eines Verbrennungsprozesses. Durch die Erfindung kann das in einem Abgasstrom enthaltene Kohlendioxid CO₂ neutralisiert werden. Es muss jeweils nur die erforderliche Reduktionsmittelmengenmasse ermittelt werden und diese Mengenmasse dem Abgasstrom hinzugefügt werden. Hierdurch erfolgt eine Spaltung des schädlichen Kohlendioxid CO₂ in unschädlichen Kohlenstoff C und unschädlichen Sauerstoff O₂. Im Rahmen eines Verbrennungsmotors ist so z.B. das Reduktionsmittel Calciumcarbid CaC₂ in Form der Einblasung hinzuzufügen. Hierdurch erfolgt sowohl die gewünschte Spaltung des Kohlendioxid CO₂ als auch eine Abbindung von Schwefeldioxid SO₂, das bei der Verbrennung von Treibstoff entstehen kann.

## Beschreibung

Die Erfindung betrifft ein Verfahren zur Erzeugung von CO₂-freien Abgasen.

### Stand der Technik:

Es ist bekannt, dass in Abgasströmen Kohlendioxid CO₂ enthalten ist. Dieses entsteht beispielsweise während eines Verbrennungsprozesses oder auch bei der Kunststoffherstellung. Diese Vorgänge können jedem Schullehrbuch Chemie entnommen werden.

### Problem beim Stand der Technik:

Kohlendioxid CO₂ ist für den Menschen schädlich und für das Fortschreiten des Treibhauseffektes verantwortlich.

### Lösung des Problems:

Die Erfindung ist dadurch gekennzeichnet, dass einem CO₂-haltigen Abgasstrom die erforderliche Menge* eines Reduktionsmittels hinzugefügt wird und hierdurch eine Spaltung des schädlichen Kohlendioxid CO₂ in unschädlichen Kohlenstoff C und unschädlichen Sauerstoff O₂ erfolgt.
* Ermittlung erfolgt durch stöchiometrische Berechnung, vgl. Ausführungsbeispiel, Fazit

### Erreichte Vorteile:

Die Erfindung hat zur Folge, dass zukünftig in Abgasströmen der Ausstoß von schädlichem Kohlendioxid CO₂ verhindert werden kann. Hierdurch kann das weitere Fortschreiten des Treibhauseffektes verhindert werden.

### Ausführungsbeispiel :

Die Erfindung kann am Beispiel des Abgasstromes eines Verbrennungsmotors (z.B. eines Kraftfahrzeugs) veranschaulicht werden:

Während des Verbrennungsprozesses wird Kohlendioxid CO₂ freigesetzt. Dieses gelangt durch den Abgasstrom in die Erdatmosphäre.

Kohlendioxid CO₂ kann durch die Erfindung in einem Abgasstrom neutralisiert werden.

Chemischer Vorgang:

Reduktionsmittel + CO₂ = C + O₂

Hierbei handelt es sich um eine Gleichung 1. Ordnung.

Es gibt die direkte Reduktion mit Kohlenstoff C. Die Reduktion mit Kohlenmonoxid CO nennt sich indirekte Reduktion. Hierbei spielt das Boudouard-Gleichgewicht eine Rolle. Die Boudouard-Reaktion lautet CO₂ + C = 2 CO.
Vergleiche zu dieser Thematik den Hochofenprozess;

FE₂O₃ + C = FE₃O₄, FE₃O₄ + C = FEO, FEO + C = FE;

FE₂O₃ sind Hämatiterze, FE₃O₄ sind Magnetiterze, FEO ist Wüstit, FE ist Roheisen;
siehe auch Lehrbuch Eisenhütte, Kap. Physikalische Chemie der Eisen- und Stahlerzeugung.

Als Reduktionsmittel kommen grundsätzlich in Frage:
- feste Stoffe z.B. Kohlenstoff,
- gasförmige Stoffe z.B. H₂ oder CO,
- flüssige Stoffe.

Im Ausführungsbeispiel schlage ich vor, als Reduktionsmittel Calciumcarbid CaC₂ zu verwenden. Calcium dient zur eventuellen Abbindung von Schwefeldioxid SO₂, das bei der Verbrennung von Treibstoff entstehen kann.

### Chemischer Vorgang:

CaC₂ + SO₂ + CO₂ = 3 C + 2O₂ + CaS

| | Mercedes S 500 | Mercedes S 350 | Mercedes S 320 CDI |
|---|---|---|---|
| Stand der Technik in g CO₂ pro km * | 279 - 283 | 242 - 247 | ??? - 204 |
| Erforderliche Reduk tionsmittelmengen masse (hier CaC₂) in g pro 10⁵ km | 634 - 643 | 550 - 561 | ??? - 463 |
| Zukünftige CO₂ - Menge in g | 0(!!!) | 0 (!!!) | 0(!!!) |

| | | | |
|---|---|---|---|
| * siehe Kopien | | | |

Im Rahmen des Ausführungsbeispiels ist Calciumcarbid CaC₂ in Form der Einblasung hinzuzufügen. Eine Einblasung erscheint am zweckmäßigsten.

### Fazit:

Das Verfahren ist derart verallgemeinerungsfähig, dass es nicht nur bei Abgasströmen von Verbrennungsmotoren (z.B. PKWs, LKWs, Motorräder, usw.) Anwendung finden kann. Das beschriebene Verfahren kann in allen Bereichen angewendet werden, in denen CO₂-haltige Abgase entstehen. Beispielhaft seien hier Verbrennungsmotoren (z.B. von Kraftfahrzeugen), Energieanlagen (z.B. Kraftwerke), private Haushalte (z.B. Heizungen) oder die Kunststoffherstellung genannt. Es gilt für jeden (!!!) CO₂-haltigen Abgasstrom. Es muss jeweils nur die "erforderliche" Reduktionsmittelmengenmasse durch stöchiometrische Berechnung ermittelt werden und diese Mengenmasse dem Abgasstrom hinzugefügt werden. Die "Hinzufügung" kann durch verschiedene Methoden wie z.B. Einblasung, Einspritzung, Einpumpung usw. erfolgen.

## Patentansprüche

1. Verfahren, **gekennzeichnet dadurch, dass** einem CO₂-haltigen Abgasstrom die erforderliche Menge eines Reduktionsmittels (Ermittlung erfolgt durch stöchiometrische Berechnung) hinzugefügt wird und hierdurch eine Spaltung des schädlichen Kohlendioxid CO₂ in unschädlichen Kohlenstoff C und unschädlichen Sauerstoff O₂ erfolgt (chemische Formel: Reduktionsmittel + CO₂ = C + O₂).

2. Verfahren, **gekennzeichnet dadurch, dass** dem Abgasstrom eines Verbrennungsprozesses die erforderliche Menge eines Reduktionsmittels (Ermittlung erfolgt durch stöchiometrische Berechnung) hinzugefügt wird und hierdurch eine Spaltung des schädlichen Kohlendioxid CO₂ in unschädlichen Kohlenstoff C und unschädlichen Sauerstoff O₂ erfolgt (chemische Formel: Reduktionsmittel + CO₂ = C + O₂).

3. Verfahren, **gekennzeichnet dadurch, dass** dem Abgasstrom eines Verbrennungsmotors die erforderliche Menge Calciumcarbid CaC₂ (Ermittlung erfolgt durch stöchiometrische Berechnung) hinzugefügt wird und hierdurch eine Spaltung des schädlichen Kohlendioxid CO₂ in unschädlichen Kohlenstoff C und unschädlichen Sauerstoff O₂ erfolgt und durch die Zugabe von Calciumcarbid CaC₂ gleichzeitig auch Schwefeldioxid SO₂ abgebunden wird, das bei der Verbrennung von Treibstoff entstehen kann (chemische Formel: Reduktionsmittel + CO₂ = C + O₂; CaC₂ + SO₂ + CO₂ = 3 C + 2 O₂ + CaS).
